# EUROPÄISCHE PATENTSCHRIFT

(11) **EP 0 445 424 B1**
(45) Veröffentlichungstag und Bekanntmachung des Hinweises auf die Patenterteilung: **27.07.1994**
(21) Anmeldenummer: 90125363.3
(22) Anmeldetag: 22.12.1990
(51) Int. Cl.: B62D 33/04

(54) **Kastenartiger Aufbau für Fahrzeuge**
Box-type body for vehicles
Carrosserie en forme de caisse pour véhicules

(30) Priorität: 09.02.1990 AT 297/90
(43) Veröffentlichungstag der Anmeldung: 11.09.1991
(73) Patentinhaber: Huber, Karl, A-6850 Dornbirn (AT)
(72) Erfinder: Huber, Karl, A-6850 Dornbirn (AT)
(74) Vertreter: Hefel, Herbert, Dipl.-Ing.

(56) Entgegenhaltungen:
- EP-A- 0 088 886
- DE-A- 2 936 662
- DE-A- 2 951 071
- DE-A- 3 200 083

## Beschreibung

Die Erfindung bezieht sich auf einen kastenartigen Aufbau für Fahrzeuge mit den Merkmalen des Oberbegriffes des Patentanspruches 1.

Kastenartige Aufbauten für Fahrzeuge, seien es Zugfahrzeuge oder Anhänger, sind in vielen Formen und Konstruktionen bekanntgeworden. Bei einer bekannten Konstruktion ist eine abklappbare Bordwand vorgesehen, ferner trägt der Aufbau ein aus Profilrohren gefertigtes Traggestell in Form von mehreren portalartigen Rahmen, über welche eine Plane gezogen wird. Für Ferntransporte ist dieser Aufbau ohne Zweifel zweckmäßig, nicht geeignet ist er jedoch für Fahrzeuge, die für Zustelldienste in kleineren Bereichen verwendet werden. Ferner gibt es kastenartige Aufbauten, deren Wände aus festen Materialien gebildet sind, wobei in der Regel in der Rückseite eine Öffnung vorgesehen ist, deren Abmessungen in etwa den Querschnittsabmessungen des Aufbaues entsprechen, und diese Öffnung ist mit einer einfachen oder einer Doppelflügeltüre verschließbar. Solche relativ aufwendige Aufbauten dienen für den Transport von empfindlichen Waren, beispielsweise Möbel. Ferner ist es auch bekannt, eine Öffnung bei einem solchen kastenartigen Aufbau durch zwei Bordwände zu verschließen, die um horizontale Achsen verschwenkbar sind, wobei die beiden übereinander liegenden Bordwände über Seilzüge miteinander verbunden sind. Die obere Bordwand ist randseitig in Kulissen geführt. Wird die untere Bordwand gelöst und nach unten geklappt, so wird über den erwähnten Seilzug die obere Bordwand nach oben gefahren und in den kastenartigen Aufbau eingeschoben. Diese Konstruktion ist sehr aufwendig, und es bedarf eines nicht unerheblichen Krafteinsatzes, um diesen Verschluß zu betätigen. Für Zustelldienste im Nahbereich ist dieser Verschluß des kastenartigen Aufbaues zu aufwendig und mit einem zu hohen Kraftaufwand zu betätigen.

Viele Erzeuger oder auch Händler sind genötigt, ihre unter Umständen sperrigen und voluminösen Waren in einem beschränkten Gebiet, beispielsweise in einer Stadt zu verteilen und zuzustellen, so z. B. ein Getränkelieferant. Für diesen Vertrieb ist es zweckmäßig, einen Aufbau zu besitzen, der die zu transportierende Ware schützt, der rasch und ohne besonderen Kraftaufwand geöffnet werden kann und der dem Bedienungspersonal beim Ent- oder Beladen evt. sogar Schutz gegen Witterungseinflüsse bietet und der eine einfache und damit kostengünstige Konstruktion aufweist. In diesem Zusammenhang ist auch ein Ladeflächenaufbau nach der DE-A-29 36 662 zu erwähnen, der von vier in den Ecken der Ladefläche angeordneten Eckstützen gebildet ist, die senkrecht hochgeführt und mit in Querrichtung verlaufenden Spriegeln verbunden sind. Auf den Spriegeln sind Längsholme zum Tragen der aus starkem Zeltleinwand oder Persenningstoff oder dgl. hergestellten Plane angebracht. Zwischen den Eckstützen erstrecken sich die Seitenwände, die an der Ladefläche scharnierartig angelenkt sind und nach außen abgeklappt werden können. In hochgeklappter Stellung werden sie an den Eckstützen verriegelt. An einer Längsseite der Ladefläche ist im Bereich der Verbindungsstellen der Eckstützen und der Spriegel als Schwenkachse eine drehbare Welle gelagert, auf der im Bereich der Wellenlagerungen zwei Tragarme befestigt sind, die zusammen mit der Welle und einem im Abstand parallel zur Welle verlaufenden, die beiden Endabschnitte der Tragarme verbindenden Längsträger einen Rahmen bilden, der durch Drehung der Welle nach außen und oben geschwenkt werden kann und die auf demselben befestigte Seitenplane nach außen und oben abhebt. Auf den Tragarmen sind an den Endabschnitten Befestigungsteile angeordnet, die zur Befestigung der Seitenplane auf dem Rahmen dienen. Zum Schwenken des Rahmens ist ein Schneckengetriebe vorgesehen, das mit einer Handkurbel antreibbar ist. Durch Betätigung der Handkurbel wird der Rahmen mit der an den Tragarmen befestigten Seitenplane nach außen und oben geschwenkt, so daß die Ladefläche an dieser Seite zugänglich ist. Der Rahmen ist zur seitlichen Abstützung des Ladegutes mit einem festen Wandteil versehen, das über zwei Gelenke an dem Längsträger des Rahmens schwenkbar befestigt ist. Das feste Wandteil ist längs seiner Endabschnitte mit Riegeln versehen, die in die an den Eckstützen angeordneten Gegenstücke eingreifen und das feste Wandteil und den Rahmen verriegelt halten. Diese Konstruktion ist nicht zweckmäßig, da ihr all jene Nachteile anhaften, die oben im Zusammenhang mit bekannten Konstruktionen bereits erörtert worden sind: Um Zugang zu der Ladefläche zu erhalten, müssen an den Enden der Seitenwand und des Wandteiles die Riegel geöffnet werden, dann muß die Seitenwand nach unten geklappt werden, und der Wandteil nach oben verschwenkt werden. Ganz offenbar handelt es sich beim Wandteil um eine stabile Metall- oder Holzkonstruktion von erheblichem Gewicht, so daß die diesen Seitenteil tragenden Konstruktionselemente sehr massiv ausgebildet werden müssen. Daß diese Konstruktion nicht zweckmäßig ist, ergibt sich auch aus der Betrachtung jener Aufgabe, die der gegenständlichen Anmeldung zugrunde liegt.

In der EP-A-0 088 886 wird ein aus Rohren gebildeter Kastenaufbau gezeigt, der bei Lastkraftwagen verwendet wird, und dessen Ladebühne durch eine Bordwand eingefaßt ist. Der aus Rohren gebildete Seitenteil des Aufbaues ist hochschwenkbar, wobei diese schwenkbaren Seitenteile ausschließlich über Federn abgestützt sind und von Federn getragen werden. Beim Verschwenken des Seitenteiles in seine Schließstellung werden diese Federn vorgespannt, wobei derjenige, der den Seitenteil in seine Verschluß -oder Schließstellung überführt, die Kraft dieser Federn unmittelbar überwinden muß. Wie dies jedoch im konkreten Fall geschehen soll, läßt diese Druckschrift offen. Eine solche Konstruktion ist für die Praxis nicht geeignet: Sollte aus irgendwelchen Gründen die den Seitenteil in seiner Schließstellung haltende Verriegelung sich lösen oder schadhaft werden, so klappen die vorgespannten Federn plötzlich und unerwartet die Seitenteile hoch, was ohne Zweifel unfallgefährdend sein kann, wenn ein solches Fahrzeug im dichten Verkehr unterwegs ist.

Um die aufgezeigten Nachteile zu vermeiden, schlägt die Erfindung (ausgehend von DE-A-2 936 662) jene Maßnahmen vor, die Inhalt und Gegenstand des kennzeichnenden Teiles des Patentanspruches 1 sind. Die erfindungsgemäße Konstruktion ist leicht, sie hat ein geringes Gewicht, die zu ihrer Betätigung tätigung notwendigen Stellkräfte sind daher klein, trotzdem ist sie in ihrer Schließstellung über ihre ganze Länge sicher verriegelbar und die für die Verwirklichung dieser Konstruktion notwenigen Bauteile haben einen einfachen übersichtlichen und leicht zu wartenden Aufbau.

Um die Erfindung zu veranschaulichen, wird sie anhand eines Ausführungsbeispieles näher erläutert, ohne die Erfindung dadurch auf dieses Ausführungsbeispiel einzuschränken. Es zeigen:
- Fig. 1: einen kastenartigen, geöffneten Aufbau für ein Lieferfahrzeug in Schrägsicht;
- Fig. 2: den Aufbau nach Fig. 1, jedoch im Normalriß;
- Fig. 3: den Aufbau in der Ansicht nach Fig. 2, jedoch verschlossen;
- Fig. 4 und 5: ein der Verriegelung des Verschlusses dienendes Detail in zwei verschiedenen Betriebsstellungen;
- Fig. 6: das in Fig. 3 von Kreis A umschlossene Detail in einem vergrößerten Maßstab, z. T. geschnitten;
- Fig. 7 und 8: ein Detail nach der Schnittlinie VII-VIII in Fig. 2.

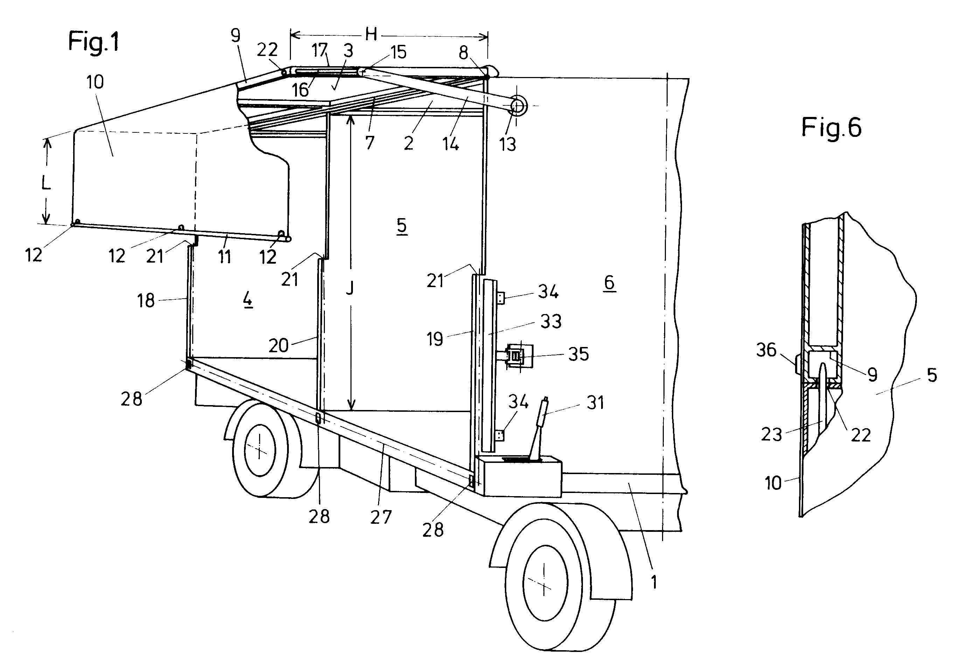

Fig. 1 zeigt in Schrägsicht einen kastenartigen Aufbau, wie er beispielsweise für einen Liefer-LKW verwendet wird. Dieser Aufbau besitzt einen Boden 1, eine Decke 2, zwei Stirnwände 4 und 6 sowie eine mittlere Trennwand 5, wobei diese Wände im wesentlichen gleiche Abstände haben und den Aufbau in zwei Kammern unterteilen. Der Boden 1, die Decke 2 und die Stirnwände 4 und 6 begrenzen die der Beschickung und Entladung des kastenartigen Aufbaues dienende Öffnung, die sich praktisch über die gesamte Länge und Höhe dieses Aufbaues erstreckt. Eine solche Öffnung kann auch an der anderen, hier in Fig. 1 nicht gezeigten Längsseite des kastenartigen Aufbaues vorgesehen sein, so daß der Aufbau von beiden Längsseiten her beschickt werden kann bzw. vom Aufbau die zu liefernde Ware entnommen werden kann.

Zum Schutz des Ladegutes ist die sich über die gesamte Längsseite des Aufbaues erstreckende Öffnung verschließbar: Dazu ist ein vorzugsweise aus Profilrohren gefertigter Rahmen 3 vorgesehen, der um eine zu seiner einen Längskante 7 parallelen Achse 8 schwenkbar gelagert ist, wobei diese Achse 8 am oberen Rand der mehrfach erwähnten Öffnung bzw. um ein geringes Maß oberhalb desselben gelagert ist. Die Abmessung H des Rahmens 3, die rechtwinkelig zur Schwenkachse 8 gemessen wird, ist ungefähr halb so groß wie die Höhe I der Öffnung.

An dem der Schwenkachse 8 abgewandten Rahmenschenkel 9 des Rahmens 3 ist eine flexible Plane 10 befestigt. Die rechtwinkelig zum Rahmenschenkel 9 gemessene Erstreckung L dieser Plane 10 beträgt etwa die Differenz der Abmessung I - H. An ihrem freien Längsrand ist diese Plane 10 mit einem Beschwerungsstab 11 verbunden, wobei korrespondierend zur Lage der Wände 4, 5 und 6 unmittelbar oberhalb dieses Beschwerungsstabes 11 Aussparungen 12 in der Plane 10 vorgesehen sind. Am gezeigten Ausführungsbeispiel überspannt diese Plane 10 auch den aus den Profilrohren gebildeten Rahmen 3.

An der Innenseite der Stirnwand 6 ist ein hier nicht sichtbarer Hydraulikmotor angeflanscht, dessen Motorwelle 13 diese Seitenwand 6 durchdringt. Am vorstehenden Teil der Motorwelle 13 ist ein Hebelarm 14 befestigt, der an seinem einen Ende einen Zapfen 15 aufweist, der in ein Langloch 16 im seitlichen Rahmenschenkel 17 formschlüssig eingreift.

Die vertikalen Wandkanten 18, 19 und 20 der Stirnwände 4 und 6 bzw. der Trennwand 5 verlaufen über die Höhe der Öffnung nicht gerade, sondern bilden einen Absatz 21, der ca. um das Maß H von der Schwenkachse 8 des Rahmens 3 distanziert ist und dessen Breite oder Ausladung etwa der Breite des Profilrohres entspricht, das den unteren Rahmenschenkel 9 des Rahmens 3 bildet. In diesem Profilrohr sind noch Bohrungen 22 vorgesehen, deren Anzahl und Abstände der Anzahl und den Abständen der Wände 4, 5 und 6 entsprechen. Diese Bohrungen 22 sind in jener Seite des Profilrohres vorgesehen, die bei abgesenktem Rahmen (Verschlußstellung) unten liegt.

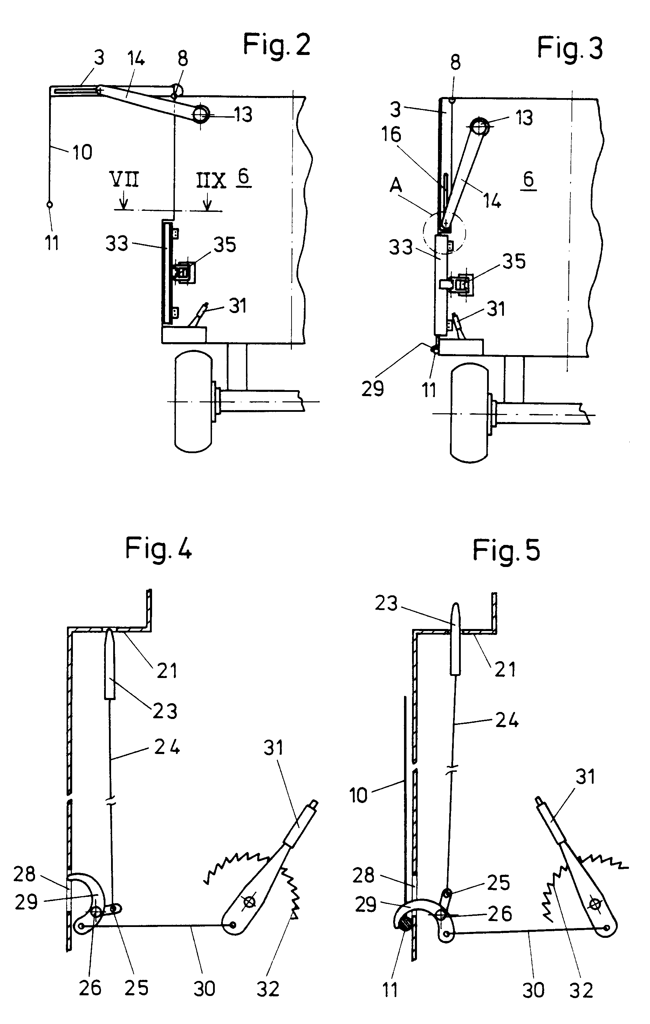

Anhand der Fig. 4, 5 und 6 wird nun ein Detail erläutert, das in den Wänden 4, 5 und 6 eingebaut ist, das aber auch außerhalb dieser Wand vorgesehen sein könnte. In den jeweils unteren, vorspringenden Abschnitten der Wandkanten 18, 19 und 20 sind vertikale Riegelbolzen 23 gelagert, die mit einem Gestänge 24 verbunden sind, das endseitig an einem Hebelarm 25 angelenkt ist, der seinerseits an einer verdrehbar gelagerten Welle 26 befestigt ist. Die Lage dieser Welle 26 innerhalb des Aufbaues ist durch die strichlierte Linie 27 in Fig. 1 angedeutet, diese Welle liegt also im Bodenbereich, wobei in der Ebene der Wände 4, 5 und 6 bzw. diesen benachbart hier im Boden 1 seitliche Öffnungen 28 ausgespart sind, hinter welchen Haken 29 liegen, die ebenfalls an der schon erwähnten Welle 26 befestigt sind. Diese Welle 26 und mit ihr die Riegelbolzen 23 und die Haken 29 sind über einen Hebelarm 25 und einen Seilzug 30 mit einem Stellhebel 31 verbunden, der mittels einer Raste und einer Zahnleiste 32 in der jeweils eingeschwenkten Stellung gehalten ist.

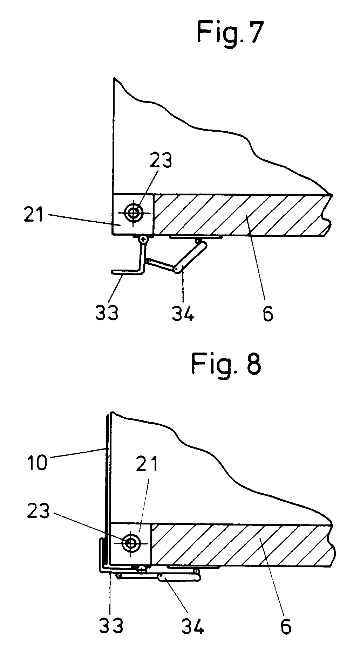

An der Vorderseite des Aufbaues, also außen an der Stirnseite 6, ist seitlich des vorspringenden Abschnittes der Wandkante 19 eine vertikal stehende Winkelprofilleiste 33 angeordnet, die über Scharniere 34 rechtwinkelig zu ihrer Längserstreckung, also in den Fig. 7 und 8 in der Zeichenebene verstellbar gelagert ist. Zur Verstellung dieser Winkelprofilleiste 33 dient ein hier im einzelnen nicht näher erläuterter Spannverschluß 35.

Soweit zur konstruktiven Gestaltung des kastenartigen Aufbaues: Die Fig. 1 und 2 zeigen den geöffneten Aufbau. Der nicht dargestellte Motor hat den Hebelarm 14 so weit verschwenkt, daß der Rahmen 3 etwa waagrecht liegt. Es ist denkbar, über den erwähnten Motor den Hebelarm 14 im Uhrzeigersinn (Fig. 1) so weit zu verschwenken, daß der Rahmen 3 auf dem Dach oder der Decke 2 aufliegt. Die Plane 10, die auch den Rahmen 3 überspannt und die mit einer Leiste 36 am unteren Rahmenschenkel 9 des Rahmens 3 noch zusätzlich befestigt sein kann (Fig. 6), hängt nun frei nach unten (Fig. 1 und Fig. 2), so daß der Laderaum des Aufbaues von der Seite her frei zugänglich ist, um das Ladegut ein- bzw. auszuladen. In der in den Fig. 1 und 2 gezeigten Stellung des Rahmens 3 und der Plane 10 bilden diese für das Bedienungspersonal einen Witterungsschutz. In dieser Stellung des Rahmens 3 (Fig. 1 und Fig. 2) ist der Stellhebel in der aus Fig. 4 ersichtlichen Lage, d. h. die Riegelbolzen 23 sind gegenüber dem Absatz 21 zurückgezogen, die Haken 29 gegenüber der Ebene der Öffnungen 28 zurückverschwenkt; die Winkelprofilleiste 33 ist seitlich abgeschwenkt (Fig. 7). Da der Rahmen 3 soweit verschwenkt werden kann, daß er auf dem Dach oder der Decke 2 des Aufbaues aufliegt, ist es auch möglich, mit geöffneter Seitenwand zu fahren und dabei Unterführungen oder Durchfahrten zu passieren, da die Umrißkontur des Fahrzeuges bei ganz geöffneter und nach oben geklappter Seitenwand nicht wesentlich größer ist, als wenn diese geschlossen wäre.

Soll nun der Laderaum verschlossen werden, so wird der Hebelarm 14 durch die Motorwelle 13 im Gegenuhrzeigersinn (Fig. 1 und Fig. 2) verschwenkt, und zwar so lange, bis der Rahmen und damit die Plane 10 die aus Fig. 3 ersichtliche Lage erreicht haben, in der ein hier nicht gezeigter Endschalter den Motor stillsetzt.

Nun liegt der untere Rahmenschenkel 9 (Fig. 6) unmittelbar oberhalb des Absatzes 21 und der Beschwerungsstab 11 der Plane 10 seitlich des Bodens 1 im Bereich der Öffnungen 28. Wird nun der Stellhebel 31 in die aus Fig. 5 ersichtliche Lage verschwenkt und in dieser arretiert, so fahren dadurch die Riegelbolzen 23 hoch, über den Absatz 21 hinaus und dringen in die Bohrungen 22 auf der Unterseite des Rahmenschenkels 9 ein. Gleichzeitig schwenken die Haken 29 nach außen, greifen durch die Aussparungen 12 in der Plane 10 und umfassen formschlüssig den Beschwerungsstab 11, so daß der aus Rahmen 3 und Plane 10 gebildete Verschluß sozusagen verriegelt ist.

Um zu vermeiden, daß bei einer eventuellen raschen Fahrt des Zustellfahrzeuges die Plane 10 allzu stark flattert, ist an der Stirnwand 6 außen die Winkelprofilleiste 33 vorgesehen, die vor Antritt einer Fahrt mittels des nicht näher beschriebenen Spannverschlusses 35 aus der Stellung nach Fig. 7 in jene nach Fig. 8 verschwenkt wird, wobei der eine Schenkel der Winkelprofilleiste 33 den vertikalen Rand der Plane 10 im Bereich der vorderen Stirnwand 6 formschlüssig übergreift und dabei festhält, so daß der Fahrtwind hier keine Angriffsfläche findet.

Im gezeigten Ausführungsbeispiel ist die erläuterte Konstruktion längs der Seitenwand des Aufbaues vorgesehen. Grundsätzlich wäre es möglich, diese Konstruktion an der Rückseite eines solchen kastenartigen Aufbaues anzuordnen. Anstelle des handbetätigten Hebels 31 kann eine motorische Verstelleinrichtung vorgesehen werden. Die Welle oder Achse 26, durch deren Drehen die Haken 29 und die Riegelbolzen 23 aktiviert werden, ist beim gezeigten Ausführungsbeispiel im Boden 1 des Aufbaues integriert. Es liegt im Rahmen der Möglichkeiten, diese Achse oder Welle unterhalb des Bodens anzubringen, wobei dann die Haken 29 zweckmäßig von unten nach oben in die Verriegelungsstellung fahren. Ist die im Zusammenhang mit den Fig. 4 und 5 beschriebene Verstellmechanik im Boden 1 und in den Wänden 4, 5 und 6 integriert, so liegt es im Rahmen der Möglichkeiten, diesen Mechanismus seitlich an den Wänden anzuordnen. Dies wird jedoch nicht für zweckmäßig erachtet, da dann die Gefahr besteht, daß durch das Ladegut die Mechanik beschädigt und in ihrer Funktionsfähigkeit beeinträchtigt wird. Ist die Welle oder Achse 26 an der Unterseite des Bodens 1 gelagert, so wäre es auch möglich, anstelle von einzelnen Haken mit dieser Welle eine Winkelleiste oder Rinnenleiste zu verbinden, die den Beschwerungs stab 11 in der Verriegelungsstellung über seine ganze Länge umfaßt. Anstelle eines Hebelgetriebes, wie hier im Zusammenhang mit den Fig. 1 und 2 zum Verschwenken des Rahmens 3 beschrieben, könnte auch ein Rädergetriebe vorgesehen sein.

Gegenüber herkömmlichen und bekannten Konstruktionen bei solchen Aufbauten zeichnet sich die Erfindung vor allem durch ihre Einfachheit und ihre leichte Bedienbarkeit aus und ferner dadurch, daß sie auch bei ungünstigen Witterungsverhältnissen noch einen Schutz für das Bedienungspersonal zu bieten vermag. Ferner ist sie ohne besonderen Kraftaufwand betätigbar, so daß ein solcher Aufbau in Verbindung mit einem Fahrzeug für Zustelldienste im Nahbereich hervorragend geeignet ist.

| **Legende zu den Hinweisziffern:** | | | |
|---|---|---|---|
| 1 | Boden | 19 | Wandkante |
| 2 | Decke | 20 | Wandkante |
| 3 | Rahmen | 21 | Absatz |
| 4 | Stirnwand | 22 | Bohrung |
| 5 | Trennwand | 23 | Riegelbolzen |
| 6 | Stirnwand | 24 | Gestänge |
| 7 | Längskante | 25 | Hebelarm |
| 8 | Achse | 26 | Welle |
| 9 | Rahmenschenkel | 27 | strichlierte Linie |
| 10 | Plane | 28 | Offnung |
| 11 | Beschwerungsstab | 29 | Haken |
| 12 | Aussparung | 30 | Seilzug |
| 13 | Motorwelle | 31 | Stellhebel |
| 14 | Hebelarm | 32 | Zahnleiste |
| 15 | Zapfen | 33 | Winkelprofilleiste |
| 16 | Langloch | 34 | Scharnier |
| 17 | Rahmenschenkel | 35 | Spannverschluß |
| 18 | Wandkante | 36 | Leiste |

## Patentansprüche

1. Kastenartiger Aufbau für Fahrzeuge mit mindestens einer sich im wesentlichen über dessen Länge und Höhe bzw. dessen Breite und Höhe erstreckende, der Beschickung und Entladung dienenden Öffnung und einer den Verschluß dieser Öffnung dienenden Einrichtung, wobei die Einrichtung aus einem am oberen Rand der Öffnung scharnierartig angelenkten Rahmen (3) besteht, dessen rechtwinkelig zu seiner Schwenkachse (8) gemessene Höhe (H) ca. halb so groß ist wie die Höhe (I) der Öffnung und an seinem der Schwenkachse (8) abgewandten und parallel zu dieser verlaufenden Rahmenschenkel (9) eine flexible Plane vorgesehen ist, deren rechtwinkelig zu diesem Rahmenschenkel (9) gemessene Erstreckung (L) etwa der Höhe (I) der Öffnung abzüglich der Höhe (H) des Rahmens (3) entspricht und mit mindestens einem seitlichen Rahmenschenkel (17) des Rahmens (3) ein Räder- oder Hebelgetriebe (14) verbunden ist, dadurch gekennzeichnet, daß die Plane (10) an ihrem unteren freien Rand einen Beschwerungsstab (11) trägt und entlang des unteren Randes der Öffnung um eine zur Schwenkachse (8) des Rahmens parallele Achse (26) schwenkbare Haken (29) vorgesehen sind, welche in der Verschlussstellung der Einrichtung den am unteren Rand der Öffnung anliegenden Beschwerungsstab (11) der Plane (10) formschlüssig übergreifen.

2. Kastenartiger Aufbau nach Anspruch 1, dadurch gekennzeichnet, daß die die Öffnung seitlich begrenzenden Wandkanten (18, 19, 20) der den Aufbau bildenden Wände (4, 5, 6) abgesetzt verlaufen, wobei der Absatz (21) von der Schwenkachse (8) des Rahmens (3) um ein Maß entfernt ist, das dessen Höhe (H) entspricht und die Tiefe des Absatzes (21) den Querschnittsabmessungen der den Rahmen (3) bildenden Profilrohre entspricht und der in der Verschlußstellung der Einrichtung den Absätzen (21) benachbart liegende Rahmenschenkel (9) in dem von den Absätzen (21) überdeckten Bereichen Bohrungen (22) aufweist, in welche in oder an den Wänden (4, 5, 6) des Aufbaues verschiebbar oder schwenkbar gelagerte Riegelbolzen (23) einfahrbar sind (Fig. 6).

3. Kastenartiger Aufbau nach den Ansprüchen 1 oder 2, dadurch gekennzeichnet, daß die Haken (29) am unteren Rand der Öffnung und die Riegelbolzen (23) mit einer gemeinsamen Achse (26) verbunden sind und diese Achse (26) manuell oder motorisch verdrehbar ist und durch die Verdrehung dieser Achse (26) sowohl die Haken (29) wie auch die Riegelbolzen (23) in ihre Haltestellung bzw. aus dieser verschwenkbar sind (Fig. 4 und Fig. 5).

4. Kastenartiger Aufbau nach Anspruch 3, dadurch gekennzeichnet, daß die Anzahl der Haken (29) der Anzahl der Riegelbolzen (23) entspricht.

5. Kastenartiger Aufbau nach einem der Ansprüche 1 bis 4, dadurch gekennzeichnet, daß die Plane (10) an ihrem dem Beschwerungsstab (11) tragenden Rand Aussparungen (12) aufweist, deren Anzahl und Verteilung der Anzahl und Verteilung der Haken (29) entsprechen.

6. Kastenartiger Aufbau nach Anspruch 2, dadurch gekennzeichnet, daß zumindest an einer Seite der Öffnung, und zwar an dem unterhalb des Absatzes (21) liegenden Bereich eine sich parallel zum Rand der Öffnung erstreckende, außen liegende Winkelleiste (33) quer zu ihrer Längserstreckung verstellbar ist, welche in der Verschlußstellung der Einrichtung den am Rand der Öffnung anliegenden Abschnitt der Plane (10) mit ihrem einen Schenkel übergreift (Fig. 8).

7. Kastenartiger Aufbau nach Anspruch 1, dadurch gekennzeichnet, daß zur Verschwenkung des Rahmens (3) ein Hebel (14) vorgesehen ist, der über einen in eine Langlochausnehmung (16) im seitlichen Rahmenschenkel (17) ragenden Führungszapfen (15) mit einem der Schwenkachse (8) des Rahmens (3) benachbart liegenden Motor, vorzugsweise Hydraulikmotor, verbunden ist und vorzugsweise der Motor innerhalb des kastenartigen Aufbaus liegt.

8. Kastenartiger Aufbau nach Anspruch 1, dadurch gekennzeichnet, daß die flexible Plane (10) den aus Profilrohren gefertigten Rahmen (3) überspannt.

9. Kastenartiger Aufbau nach Anspruch 1, dadurch gekennzeichnet, daß die Schwenkachse (8) des Rahmens (3) um ein geringes Maß oberhalb des Randes der vom Rahmen (3) verschließbaren Öffnung des Aufbaues liegt.

## Claims

1. Box-type body for vehicles, having at least one opening which extends substantially over the length and height thereof or the width and height thereof and which serves for loading and unloading, and a device serving to close this opening, the device comprising a frame (3) which is coupled in the manner of a hinge to the upper edge of the opening and whereof the height (H) measured at right angles to its pivot axis (8) is approximately half as large as the height (I) of the opening, and a flexible tarpaulin is provided at its frame limb (9) remote from the pivot axis (8) and running parallel thereto, the extent (L) of the flexible tarpaulin measured at right angles to this frame limb (9) corresponding approximately to the height (I) of the opening minus the height (H) of the frame (3) and a wheel gear or lever gear (14) being connected to at least one lateral frame limb (17) of the frame (3), characterized in that the tarpaulin (10) carries at its lower free edge a weighting rod (11) and there are provided along the lower edge of the opening hooks (29) which are pivotal about a spindle (26) parallel to the pivot axis (8) of the frame and which, in the closure position of the device, reach with form fit over the weighting rod (11), bearing on the lower edge of the opening, of the tarpaulin (10).

2. Box-type body according to Claim 1, characterized in that the wall edges (18, 19, 20), laterally delimiting the opening, of the walls (4, 5, 6) forming the body run in the manner of a shoulder, the shoulder (21) being spaced from the pivot axis (8) of the frame (3) by an amount which corresponds to the height (H) thereof and the depth of the shoulder (21) corresponding to the cross-sectional dimensions of the tubular profile forming the frame (3) and the frame limb (9) lying adjacent the shoulders (21) in the closure position of the device having, in the regions covered by the shoulders (21), bores (22) into which locking pins (23) mounted displaceably or pivotally in or on the walls (4, 5, 6) of the body can be introduced (Fig. 6).

3. Box-type body according to Claims 1 or 2, characterized in that the hooks (29) at the lower edge of the opening and the locking pins (23) are connected to a common spindle (26) and this spindle (26) can be turned manually or by motor, and as a result of turning this spindle (26) both the hooks (29) and the locking pins (23) are pivotal into and out of their holding position (Fig. 4 and Fig. 5).

4. Box-type body according to Claim 3, characterized in that the number of hooks (29) corresponds to the number of locking pins (23).

5. Box-type body according to one of Claims 1 to 4, characterized in that the tarpaulin (10) has, on its edge carrying the weighting rod (11), cutouts (12) whereof the number and distribution correspond to the number and distribution of the hooks (29).

6. Box-type body according to Claim 2, characterized in that at least on one side of the opening, in particular at the region lying below the shoulder (21), an angled strip (33) extending parallel to the edge of the opening and lying on the outside is adjustable transversely to its longitudinal extent, and in the closure position of the device reaches over the section of the tarpaulin (10) bearing on the edge of the opening by means of its one limb (Fig. 8).

7. Box-type body according to Claim 1, characterized in that, for pivoting the frame (3), there is provided a lever (14) which is connected by way of a guiding pin (15) projecting into a slot-shaped cutout (16) in the lateral frame limb (17) to a motor, preferably a hydraulic motor, lying adjacent the pivot axis (8) of the frame (3), and preferably the motor lies within the box-type body.

8. Box-type body according to Claim 1, characterized in that the flexible tarpaulin (10) is stretched over the frame (3), which is composed from tubular profiles.

9. Box-type body according to Claim 1, characterized in that the pivot axis (8) of the frame (3) lies above the edge of the opening of the body which can be closed by the frame (3) by a small amount.

## Revendications

1. Carrosserie en forme de caisson pour véhicules comportant au moins une ouverture s'étendant sensiblement sur sa longueur et sa hauteur ou sur sa largeur et sa hauteur et servant au chargement et au déchargement, et un dispositif servant à la fermeture de cette ouverture, carrosserie dans laquelle le dispositif est constitué d'un cadre (3) articulé par une charnière au bord supérieur de l'ouverture, dont la hauteur (H) mesurée à angle droit avec son arbre pivot (8) est égale à la moitié de la hauteur (I) de l'ouverture, et il est prévu, sur la branche (9) du cadre opposée à la branche (8) et s'étendant parallèlement à celle-ci, un prélart flexible dont l'extension (L) mesurée perpendiculairement à cette branche (9) du cadre correspond plus ou moins à la hauteur (I) de l'ouverture, déduction faite de la hauteur (H) du cadre (3), et un engrenage à roue ou à levier (14) est raccordé au moins à une branche latérale (17) du cadre (3), caractérisée en ce que le prélart (10) porte sur son bord inférieur libre une tige alourdissante (11) et il est prévu, le long du bord inférieur de l'ouverture, des crochets (29) qui peuvent pivoter autour d'un arbre (26) parallèle à l'arbre pivot (8) du cadre, ces crochets (29) se rabattant mécaniquement sur la tige alourdissante (11) du prélart appliquée sur le bord inférieur de l'ouverture.

2. Carrosserie en forme de caisson selon la revendication 1, caractérisée en ce que les arètes (18, 19, 20), délimitant latéralement l'ouverture, des parois (4, 5, 6) formant la carrosserie sont décalées, l'épaulement (21) étant éloigné de l'arbre pivot (8) du cadre (3) d'une distance qui correspond à sa hauteur (H) et la profondeur de l'épaulement (21) correspondant aux dimensions en coupe transversale des tubes profilés formant le cadre (3), et la branche (9) du cadre voisine des épaulements (21) en position de fermeture du dispositif présente, dans les zones recouvertes par les épaulements (21), des alésages (22) dans lesquels des boulons d'assemblage (23) montés à coulissement ou à pivotement dans ou sur les parois (4, 5, 6) de la carrosserie peuvent être introduits (Fig. 6).

3. Carrosserie en forme de caisson selon la revendication 1 ou 2, caractérisée en ce que les crochets (29) du bord inférieur de l'ouverture et les boulons d'assemblage (23) sont raccordés à un arbre commun (26) et cet arbre (26) peut être soumis à une rotation manuelle ou motorisée, qui permet de faire pivoter les crochets (29) ainsi que les boulons d'assemblage (23) dans leur position de fixation ou hors de celle-ci (Fig. 4 et 5).

4. Carrosserie en forme de caisson selon la revendication 3, caractérisée en ce que le nombre de crochets (29) correspond au nombre de boulons d'assemblage (23).

5. Carrosserie en forme de caisson selon l'une quelconque des revendications 1 à 4, caractérisée en ce que le prélart (10) présente sur son bord portant la tige alourdissante (11) des évidements (12) dont le nombre et la répartition correspondent au nombre et à la répartition des crochets (29).

6. Carrosserie en forme de caisson selon la revendication 2, caractérisée en ce qu'au moins sur un côté de l'ouverture, dans la zone qui se trouve en dessous de l'épaulement (21), une barre angulaire externe (33) s'étendant parallèlement au bord de l'ouverture peut se déplacer transversalement à sa dimension longitudinale, cette barre se rabattant, par sa première branche, sur la section du prélart (10) appliquée sur le bord de l'ouverture, en position de fermeture du dispositif (Fig. 8).

7. Carrosserie en forme de caisson selon la revendication 1, caractérisée en ce qu'il est prévu, pour faire pivoter le cadre (3), un levier (14) qui est raccordé, via un tourillon de guidage (15) faisant saillie dans un évidement longitudinal (16) de la branche latérale (17) du cadre, à un moteur, de préférence un moteur hydraulique, situé au voisinage de l'arbre pivot (8) du cadre (3) et, de préférence, le moteur est situé à l'intérieur de la carrosserie en forme de caisson.

8. Carrosserie en forme de caisson selon la revendication 1, caractérisée en ce que le prélart flexible (10) est tendu sur le cadre (3) formé de tubes profilés.

9. Carrosserie en forme de caisson selon la revendication 1, caractérisée en ce que l'arbre pivot (8) du cadre (3) est situé à une faible distance au-dessus du bord de l'ouverture qui peut être fermée par le cadre (3).
